# EUROPÄISCHE PATENTSCHRIFT

(11) **EP 0 564 685 B1**
(45) Veröffentlichungstag und Bekanntmachung des Hinweises auf die Patenterteilung: **17.11.1994**
(21) Anmeldenummer: 92106193.3
(22) Anmeldetag: 10.04.1992
(51) Int. Cl.: G01D 5/34

(54) **Teilungsträger**
Support for a measuring scale
Support pour une échelle de mesure

(43) Veröffentlichungstag der Anmeldung: 13.10.1993
(73) Patentinhaber: Dr. Johannes Heidenhain GmbH, D-83292 Traunreut (DE)
(72) Erfinder: Feichtinger, Kurt, W-8221 Palling (DE)

(56) Entgegenhaltungen:
- FR-A- 2 554 163
- GB-A- 2 237 391
- PATENT ABSTRACTS OF JAPAN vol. 14, no. 238 (P-1050)21. Mai 1990 & JP-A-2059613
- PATENT ABSTRACTS OF JAPAN vol. 10, no. 93 (P-445)10. April 1986 & JP-A-60228918

## Beschreibung

Die Erfindung betrifft einen Teilungsträger in Form einer drehbar gelagerten, ringförmigen Glas- oder Kunststoffscheibe in Geräten insbesondere zur Winkelmessung. Diese Geräte sind bevorzugt inkrementale Drehgeber lichtelektrischer Bauart, die nach dem sogenannten Durchlicht-Prinzip arbeiten, bei dem Lichtbündel den transparenten Gitter-Teilungsträger und die vorgelagerte Gitter-Abtastplatte durchdringen.

Bei derartigen Geräten zur Winkelmessung ist ein Teilungsträger aus transparentem Material wie Glas oder Kunststoff erforderlich. Der Vorteil des Durchlicht-Abtastprinzips liegt insbesondere in der Unempfindlichkeit gegenüber Verschmutzungen, so daß diese Geräte eine hohe Betriebssicherheit und Meßgenauigkeit aufweisen. Die Anwendung derartiger Geräte (Drehgeber) ist aber begrenzt, weil durch die Glas- oder Kunststoffscheibe nur eine begrenzte Drehzahl zulässig ist, wenn eine Zerstörung des Teilungsträgers durch Überschreiten der erlaubten Zugbeanspruchung ausgeschlossen werden soll.

Aus dem Dokument Patent Abstracts of Japan, JP-A-2 059 613 ist es bekannt, einen Teilungsträger in Form einer rotierenden Codescheibe mit Hilfe eines Drehrahmens zu schützen.

Aufgabe der Erfindung ist es, mit einfachen Mitteln einen transparenten Teilungsträger in Form einer Glas- oder Kunststoffscheibe zu schaffen, der auch hohe Drehzahlen zuläßt, ohne daß die Betriebssicherheit des Gerätes beeinträchtigt wird.

Die Erfindung löst die gestellte Aufgabe dadurch, daß am Umfang der mit einer Teilung versehenen Glas- oder Kunststoffscheibe mindestens ein Ring aufgebracht ist und daß mittels des Ringes eine Vorspannung der Glas- oder Kunststoffscheibe bewirkt wird.

Durch das besondere Merkmal der Erfindung, daß der die Glas- oder Kunststoffscheibe umschließende Ring eine Vorspannung bewirkt, erfolgt beim Erreichen einer hohen Drehzahl eine Kompensation der Zug- und Druckbeanspruchungen des Teilungsträgers. Der aufgesetzte Ring (Druckring) verursacht nämlich im Stillstand des Teilungsträgers eine Druckspannung, die bei Rotation durch die auftretenden Fliehkräfte abgebaut wird. Durch die Wahl einer geeigneten Vorspannung mittels des Ringes kann erreicht werden, daß sich Zug- oder Druckbeanspruchungen in der Glas- oder Kunststoffscheibe bei Erreichen einer hohen Drehzahl faktisch aufheben.

Der am Umfang der Glas- oder Kunststoffscheibe aufgesetzte Ring ist bevorzugt aus Metall gefertigt. Er kann aber auch aus Kunststoff bestehen. Der Ring kann im einfachsten Fall durch Schrumpfen am Teilungsträger aufgezogen sein. Eine weitere Möglichkeit besteht darin, daß am Umfang des Teilungsträgers ein Ring mit einem Außenkonus zweckmäßig durch Kitten befestigt wird, auf den ein weiterer Ring mit einem entsprechenden Innenkonus aufgesetzt wird, der den erstgenannten Ring beim Aufschieben vorspannt. Zum Vorspannen des Teilungsträgers kann auch ein Ring aus flexiblen Spannbändern oder steifen Segmenten vorgesehen sein, die mittels Schrauben miteinander verbunden sind, durch welche die Vorspannung variiert werden kann.

Der Teilungsträger nach der Erfindung wird anhand der Zeichnung näher erläutert.

Es zeigt
- Figur 1: perspektivisch einen lichtelektrischen Drehgeber nach dem Stand der Technik, von dem die Erfindung ausgeht,
- Figur 2: im Schnitt einen Teilungsträger nach der Erfindung mit einem konischen Druckring,
- Figur 3: eine Draufsicht auf einen Teilungsträger nach der Erfindung mit einem Druckring in Form von Segmenten,
- Figur 4: im Schnitt einen Teilungsträger nach der Erfindung mit aufgeschrumpftem Druckring,
- Figur 5: eine Draufsicht auf einen Teilungsträger nach der Erfindung mit einem Druckring in Form von Spannbändern.

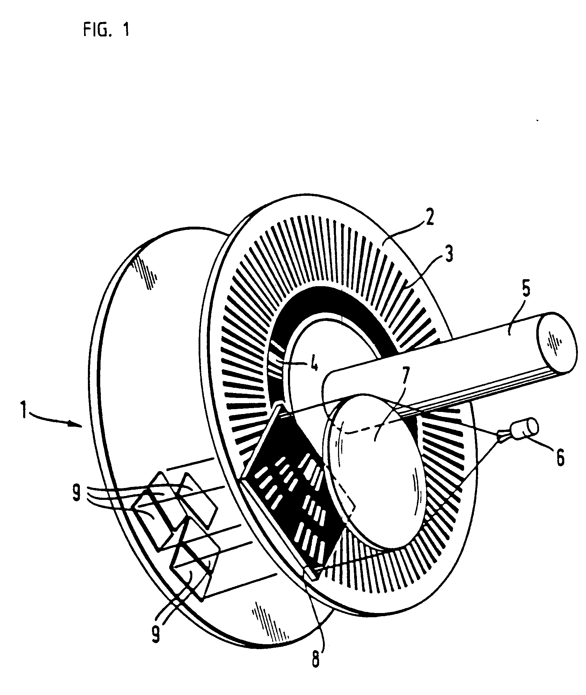

Die Figur 1 zeigt einen bekannten inkrementalen Drehgeber 1 lichtelektrischer Art, von dem die Erfindung ausgeht. Dieser Drehgeber arbeitet nach dem Durchlicht-Abtastprinzip.

Am scheibenförmigen Träger 2 aus Glas ist eine Teilung 3 als Radialgitter vorgesehen. Die lichtundurchlässigen Striche der Teilung 3, die etwa so breit sind wie die lichtdurchlässigen Striche, bestehen zweckmäßig aus einer dünnen Chromschicht, die auf die Glasscheibe 2 aufgedampft sind. Auf einer zweiten Spur ist zusätzlich eine Referenzmarke 4 vorgesehen.

Im geringen Abstand gegenüber der drehbaren Glasscheibe 2 ist eine Abtasteinheit 8 angeordnet, die auf vier Feldern jeweils die gleiche Gitterteilung wie die Glasscheibe 2 und ein Abtastfeld für die Referenzmarke 4 trägt. Die vier Strichgitter der Abtasteinheit 8 sind jeweils um ein Viertel der Teilungsperiode zueinander versetzt. Alle Felder werden von einem parallel ausgerichteten Lichtbündel durchstrahlt, das von einer Lampe 6 mit Kondensor 7 ausgeht. Bei Drehung der Glasscheibe 2 um die Achse 5 wird der Lichtstrom moduliert und seine Intensität von Photoelementen 9 erfaßt. Dabei werden sinusförmige Signale erzeugt, wobei die Anzahl der Signalperioden pro Umdrehung ein Maß für den Drehwinkel ist.

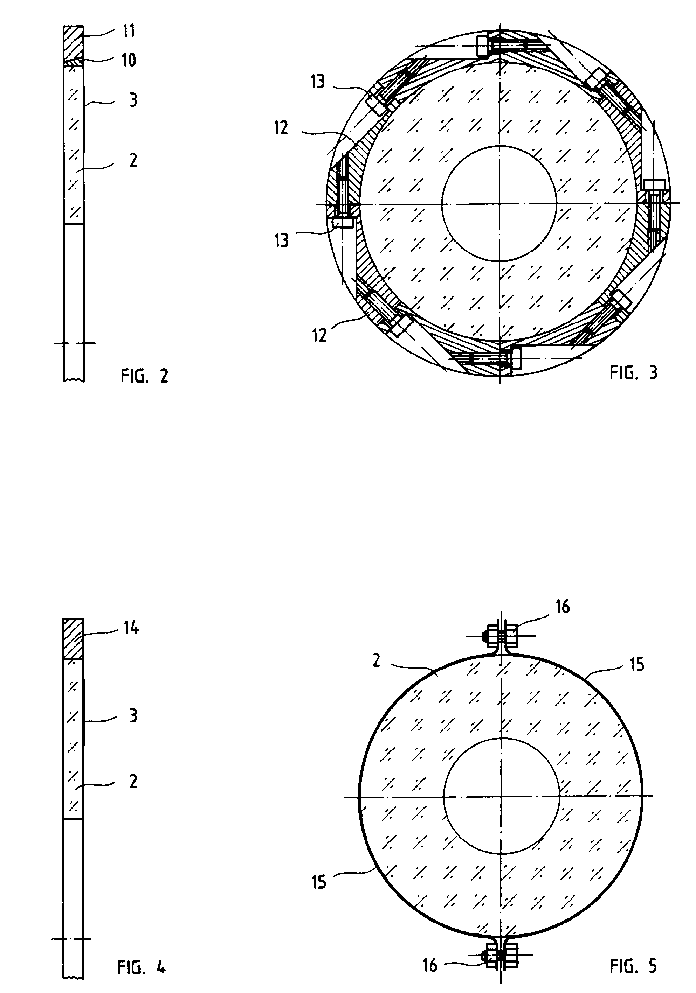

In Figur 2 ist am Umfang der Glasscheibe 2, die in Übereinstimmung mit Figur 1 eine Teilung 3 aufweist, ein Ring 10 durch Kitten aufgebracht, der außen einen Konus aufweist und der mittels eines zweiten Ringes 11, der innen einen Konus besitzt, zusammengedrückt wird, so daß die Glasscheibe 2 vorgespannt wird. Die Ringe 10 und 11 sind zweckmäßig aus Metall gefertigt.

Die Glasscheibe 2 wird dabei durch den Druckring 10 zweckmäßig so vorgespannt, daß beim Erreichen einer hohen (maximalen) Drehzahl eine Kompensation der Zug- und Druckbeanspruchungen erfolgt. Dabei sind Drehzahlen bis etwa 50.000 Umdrehungen pro Minute erreichbar.

Die Figur 3 zeigt eine Glasscheibe 2 mit einer Teilung gemäß Figur 1, die von starren Segmenten 12 aus Metall umschlossen ist, welche durch Schrauben 13 zu einer als Druckring wirkenden Einheit verbunden sind. Mittels der Schrauben 13 kann dabei die Vorspannung der Glasscheibe 2 variiert und im Hinblick auf die maximale Drehzahl optimal den Erfordernissen angepaßt werden.

In Figur 4 wird die mit einer Teilung 3 gemäß Figur 1 versehene Glasscheibe 2 durch einen Ring 14 aus Metall vorgespannt, der aufgeschrumpft ist. Das geschieht so, daß der Innendurchmesser des Ringes 14 bezüglich des Außendurchmessers der Glasscheibe 2 etwas kleiner gefertigt und durch nachfolgendes Erhitzen so vergrößert wird, daß der Ring 14 auf die Glasscheibe 2 aufgeschoben werden kann. Nach dem Abkühlen schrumpft der Ring 14 und bewirkt dabei eine Vorspannung der Glasscheibe 2.

In Figur 5 wird die mit einer Teilung gemäß Figur 1 versehene Glasscheibe 2 durch flexible Stahlbänder 15 vorgespannt, die mittels Schrauben 16 miteinander verbunden sind, durch welche die Vorspannung eingestellt werden kann.

Die Erfindung ist nicht auf den gezeigten inkrementalen Drehgeber 1 beschränkt, sondern auch bei absoluten Drehgebern mit Codespuren als Teilung anwendbar.

## Patentansprüche

1. Teilungsträger in Form einer drehbar gelagerten, ringförmigen Glas- oder Kunststoffscheibe in Geräten insbesondere zur Winkelmessung, dadurch gekennzeichnet, daß am Umfang der mit einer Teilung (3) versehenen Glas- oder Kunststoffscheibe (2) mindestens ein Ring (10, 12, 14, 15) aufgebracht ist und daß mittels des Ringes (10, 12, 14, 15) eine Vorspannung der Glas- oder Kunststoffscheibe (2) bewirkt wird.

2. Teilungsträger nach Anspruch 1, dadurch gekennzeichnet, daß der Ring (10, 12, 14, 15) an der Glas- oder Kunststoffscheibe (2) eine solche Vorspannung bewirkt, daß beim Erreichen einer hohen Drehzahl des Glas- oder Kunststoffringes (2) faktisch eine Kompensation der Zug- und Druckbeanspruchungen erfolgt.

3. Teilungsträger nach Anspruch 1 und 2, dadurch gekennzeichnet, daß am Umfang der Glas- oder Kunststoffscheibe (2) ein vorgespannter Metall- oder Kunststoffring ( 10, 12, 14, 15) aufgebracht ist.

4. Teilungsträger nach Anspruch 1 bis 3, dadurch gekennzeichnet, daß der Ring (14) an der Glas- oder Kunststoffscheibe (2) durch Schrumpfen aufgezogen ist.

5. Teilungsträger nach Anspruch 1 bis 3, dadurch gekennzeichnet, daß am Umfang der Glas- oder Kunststoffscheibe (2) ein Ring (10) mit einem Außenkonus befestigt ist, auf den ein weiterer Ring (11) mit einem Innenkonus zum Erzeugen der Vorspannung aufgesetzt ist.

6. Teilungsträger nach Anspruch 5, dadurch gekennzeichnet, daß der Ring (10) mit dem Außenkonus durch Kitten an der Glas- oder Kunststoffscheibe (2) befestigt ist.

7. Teilungsträger nach Anspruch 1 bis 3, dadurch gekennzeichnet, daß der Ring (15) am Umfang der Glas- oder Kunststoffscheibe (2) durch flexible Spannbänder und Befestigungsmittel (16) hierfür gebildet ist.

8. Teilungsträger nach Anspruch 1 bis 3, dadurch gekennzeichnet, daß der Ring (12) am Umfang der Glas- oder Kunststoffscheibe (2) durch steife Spannsegmente gebildet ist, die jeweils durch Schrauben (13) miteinander verbunden sind.

9. Die Verwendung des Teilungsträgers (2) nach einem der vorhergehenden Ansprüche in einem inkrementalen Drehgeber (1) lichtelektrischer Bauart.

## Claims

1. A scale support in the form of a rotatably mounted, annular glass or plastics disc in apparatus especially for angle measurement, characterized in that at least one ring (10, 12, 14, 15) is fitted on the periphery of the glass or plastics disc (2) provided with a scale (3) and in that the glass or plastics disc (2) is pre-stressed by means of the ring (10, 12, 14, 15).

2. A scale support according to claim 1 characterized in that the ring (10, 12, 14, 15) creates such pre-stressing of the glass or plastics disc (2) that an effective compensation of the stresses in tension and compression is effected on attaining a high speed of rotation of the glass or plastics disc (2).

3. A scale support according to claim 1 and 2, characterized in that a pre-stressed metal or plastics ring (10, 12, 14, 15) is fitted to the periphery of the glass or plastics disc (2).

4. A scale support according to claim 1 to 3, characterized in that the ring (14) is shrink-filled on the glass or plastics disc (2).

5. A scale support according to claim 1 to 3, characterized in that a ring (10) with an external taper is fixed on the periphery of the glass or plastics disc (2) and a further ring (11) with an internal taper is fitted on the first ring (10) to create the prestressing.

6. A scale support according to claim 5, characterized in that the ring (10) with the external taper is fixed to the glass or plastics disc (2) by cement.

7. A scale support according to claim 1 to 3, characterized in that the ring (15) on the periphery of the glass or plastics disc (2) is formed by flexible tensioning bands and fixing means (16) therefor.

8. A scale support according to claim 1 to 3, characterized in that the ring (12) on the periphery of the glass or plastics disc (2) is formed by stiff clamping segments which are connected together by screws (13).

9. Use of the scale support (2) according to any of the preceding claims in an incremental rotary transducer (1) of photoelectric construction.

## Revendications

1. Support de graduation se présentant sous la forme d'une plaque annulaire de verre ou de matière plastique montée tournante dans des appareils destinés notamment à la mesure d'angles, caractérisé par le fait qu'au moins un anneau (10, 12, 14, 15) est placé sur le pourtour de la plaque (2) de verre ou de matière plastique pourvue d'une graduation (3) et par le fait qu'au moyen de l'anneau (10, 12, 14, 15) on applique une précontrainte sur la plaque (2) de verre ou de matière plastique.

2. Support de graduation selon la revendication 1, caractérisé par le fait que l'anneau (10, 12, 14, 15) exerce sur la plaque (2) de verre ou de matière plastique une précontrainte telle qu'il se produit une compensation des contraintes de traction et de compression lorsque la plaque (2) de verre ou de matière plastique atteint une vitesse de rotation élevée.

3. Support de graduation selon les revendications 1 et 2, caractérisé par le fait qu'un anneau précontraint (10, 12, 14, 15) en métal ou en matière plastique est placé sur le pourtour de la plaque (2) de verre ou de matière plastique.

4. Support de graduation selon les revendications 1 à 3, caractérisé par le fait que l'anneau (14) est monté par frettage sur la plaque (2) de verre ou de matière plastique.

5. Support de graduation selon les revendications 1 à 3, caractérisé par le fait qu'un anneau (10) pourvu d'un cône extérieur est fixé sur le pourtour de la plaque (2) de verre ou de matière plastique, anneau sur lequel est enfilé un autre anneau (11) pourvu d'un cône intérieur aux fins de produire la précontrainte.

6. Support de graduation selon la revendication 5, caractérisé par le fait que l'anneau (10) pourvu du cône extérieur est fixé par scellement sur la plaque (2) de verre ou de matière plastique.

7. Support de graduation selon les revendications 1 à 3, caractérisé par le fait que l'anneau (15) placé sur le pourtour de la plaque (2) de verre ou de matière plastique est constitué par des sangles de serrage souples et des moyens de fixation (16).

8. Support de graduations selon les revendications 1 à 3, caractérisé par le fait que l'anneau (12) placé sur le pourtour de la plaque (2) de verre ou de matière plastique est constitué par des segments rigides qui sont reliés entre eux par des vis (13).

9. Utilisation du support de graduation (2) selon l'une des revendications précédentes dans un codeur (1) incrémental de type photo-électrique.
